# EUROPEAN PATENT APPLICATION

(11) **EP 2 098 695 A2**
(43) Date of publication of application: **09.09.2009**
(21) Application number: 09152431.4
(22) Date of filing: 10.02.2009
(51) Int. Cl.: F01N 3/08, F01N 11/00

(54) **Device and method for determining degradation of vehicle exhaust purification catalyst**

(30) Priority: 04.03.2008 JP 2008053818
(71) Applicant: Toyota Jidosha Kabushiki Kaisha, Toyota-shi, Aichi-ken 471-8571 (JP)
(72) Inventor: Morikawa, Atsushi, Toyota-shi Aichi 471-8571 (JP)
(74) Representative: Pautex Schneider, Nicole Véronique

(57) **Abstract**

An electronic control unit (50) estimates the amount of the exhaust purification reaction on a NOx storage reduction catalyst supported on a PM filter (42), by comparing the states of exhaust gas before and after passage through the PM filter (42) based on the upstream-side exhaust gas temperature detected by an upstream-side exhaust temperature sensor (55) and the downstream-side exhaust gas temperature detected by a downstream-side exhaust temperature sensor (56). The unit (50) determines the degradation of the NOx storage reduction catalyst based on a relation between the catalyst bed temperature and the estimated amount of the exhaust purification reaction on the NOx storage reduction catalyst when the catalyst bed temperature is in a temperature range in which the amount of the reaction increases as the catalyst bed temperature rises and which is below an activation temperature at which the activation of the NOx storage reduction catalyst is completed.

## Description

### BACKGROUND OF THE INVENTION

### 1. Field of the Invention

The invention relates to device and method for determining degradation of a vehicle exhaust purification catalyst that determine the presence/absence or the degree of degradation of an exhaust purification catalyst that is provided in an exhaust passageway of a vehicle-mounted internal combustion engine.

### 2. Description of the Related Art

The exhaust purification catalyst provided in an exhaust passageway of an internal combustion engine gradually degrades and therefore the exhaust purification capability declines as the catalyst is used over a long period of time. If the exhaust purification catalyst thus degraded continues to be used, the property of the exhaust gas deteriorates, so that there is a need of maintenance, such as replacement of the degraded exhaust purification catalyst, or the like. In order to perform such maintenance at an appropriate timing, it is necessary to accurately achieving the degree of the degradation of the exhaust purification catalyst.

When the exhaust purification reaction is occurring on the exhaust purification catalyst, heat of the reaction raises the temperature of the exhaust gas as the gas passes through the exhaust purification catalyst. However, when the degradation of the exhaust purification catalyst progresses so that the exhaust purification reaction becomes low, the heat produced by the exhaust purification reaction becomes small, and therefore the amount of rise in exhaust gas temperature declines. Specifically, the amount of rise in exhaust gas temperature, during the passage through the exhaust purification catalyst, changes while having correlation with the degree of degradation of the exhaust purification catalyst.

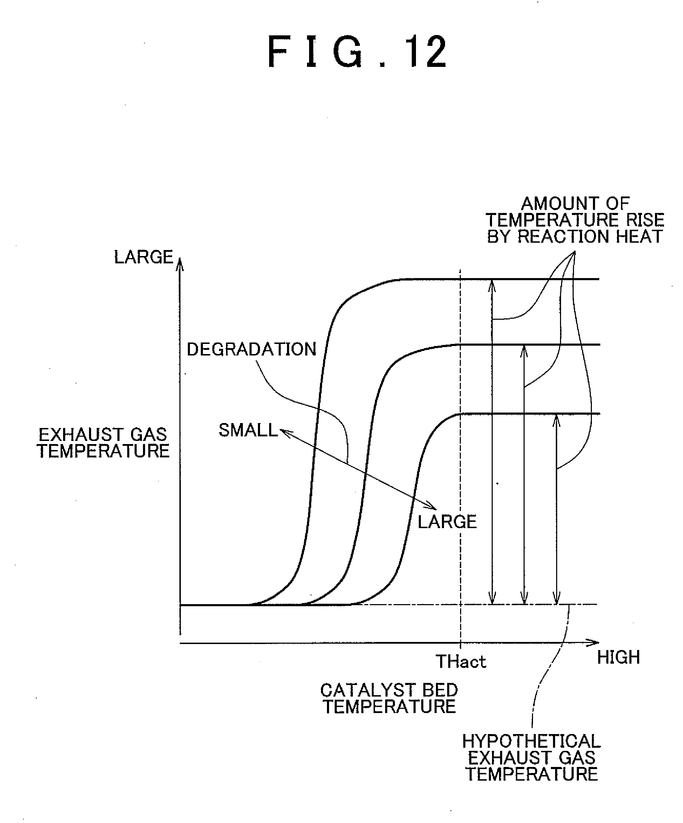

Therefore, a device for determining degradation of a vehicle exhaust purification catalyst described in Japanese Patent Application Publication No. 2005-69218 (JP-A-2005-69218) is provided with an exhaust gas temperature sensor at a site in an exhaust passageway on the downstream side of the exhaust purification catalyst, and detects the temperature of exhaust gas that has passed through the exhaust purification catalyst. Incidentally, as shown in FIG 12, the exhaust purification catalyst activates when the catalyst bed temperature rises. When the catalyst bed temperature rises to or above an activation temperature THact, the exhaust purification reaction reaches a most accelerated state. Therefore, the device for determining degradation of a catalyst described in the Japanese Patent Application Publication No. 2005-69218 (JP-A-2005-69218) estimates the amount of the heat produced by the reaction at the exhaust purification catalyst based on the exhaust gas temperature detected by the exhaust gas temperature sensor during a state in which the catalyst bed temperature has become equal to or higher than the activation temperature Thact, which is the state the exhaust purification reaction occurs most actively. Based on the amount of heat produced by the reaction, the device determines the degradation of the exhaust purification catalyst.

Concretely, as shown by a single-dotted line in FIG 12, the device for determining degradation compares a hypothetical exhaust gas temperature calculated on the assumption that the catalyst degradation has advanced to a state where the exhaust purification reaction does not occur at all and a detected value of the exhaust gas temperature shown by solid lines. The smaller the deviation of the detected exhaust gas temperature from the hypothetical exhaust gas temperature is, the smaller the heat of reaction on the exhaust purification catalyst is, which is the more advanced the degradation of the exhaust purification catalyst is determined by the device.

Thus, by comparing the hypothetical exhaust gas temperature with the exhaust gas temperature detected by the exhaust gas temperature sensor during a state where the exhaust purification catalyst has activated, the degradation of the exhaust purification catalyst can be determined based on the amount of the deviation of the detected temperature of the hypothetical temperature.

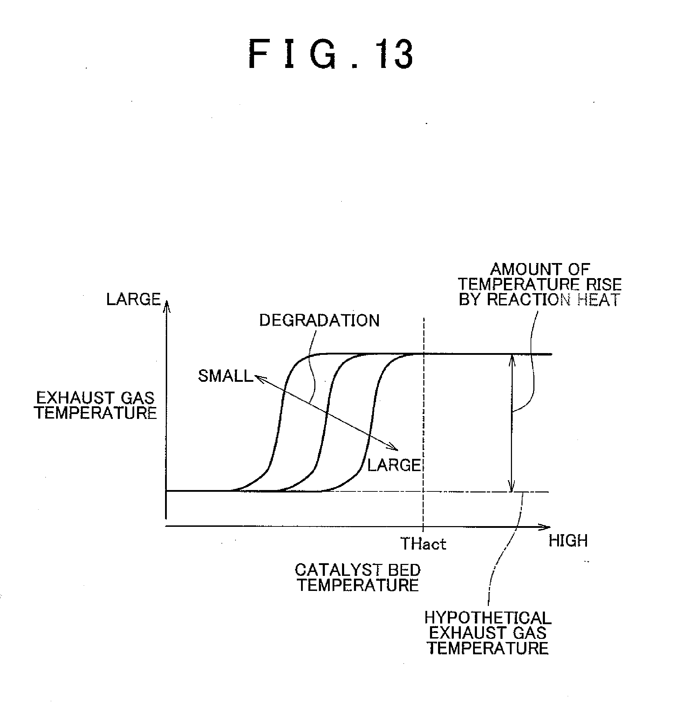

In the case where the amount of reactants supplied to the exhaust purification catalyst is small relative to the exhaust purification capability of the exhaust purification catalyst, the reactants fully react during the passage through the exhaust purification catalyst, and therefore the amount of the exhaust purification reaction is substantially constant irrespective of the degree of degradation of the exhaust purification catalyst. Hence, the heat produced by the reaction is substantially constant, as shown in FIG. 13. Therefore, the exhaust gas temperature detected by the exhaust gas temperature sensor on the downstream side of the exhaust purification catalyst does not clearly show differences in the degree of degradation of the catalyst. In consequence, if the amount of reactants supplied to the exhaust purification catalyst is small, it becomes difficult to accurately determine the degradation of the exhaust purification catalyst based on the exhaust gas temperature detected by the exhaust gas temperature sensor.

This problem is not limited to the devices determining degradation that calculate the produced amount of heat based on the exhaust gas temperature at the downstream side of the exhaust purification catalyst and determines the degradation of the exhaust purification catalyst based on the calculated amount of heat, as described above. Specifically, the problem can also occur similarly in devices determining in which sensors that detect the amount of a reactant contained in exhaust gas are provided on both the upstream side and the downstream side of an exhaust purification catalyst, then the amount of the reaction on the exhaust purification catalyst is calculated from the difference between the amounts of the reactant detected by the two sensors, and then the degree of degradation of the exhaust purification catalyst is determined based on the magnitude of the calculated amount of the reaction.

### SUMMARY OF THE INVENTION

The invention provides a device and a method for determining degradation of a vehicle exhaust purification catalyst that are able to determine degradation of the exhaust purification catalyst even in the case where the amount of a reactant supplied to the exhaust purification catalyst is small.

A first aspect of the invention relates to a device for determining degradation of a vehicle exhaust purification catalyst that includes: catalyst bed temperature estimation means for estimating catalyst bed temperature of an exhaust purification catalyst that is provided in an exhaust passageway of an internal combustion engine; and reaction amount estimation means for estimating reaction amount of an exhaust purification reaction on the exhaust purification catalyst. The device for determining degradation further includes degradation determination means for determining degradation of the exhaust purification catalyst based on a relation between the catalyst bed temperature estimated by the catalyst bed temperature estimation means and the reaction amount of the exhaust purification reaction estimated by the reaction amount estimation means when the catalyst bed temperature is in a temperature range in which the reaction amount on the exhaust purification catalyst increases as the catalyst bed temperature rises and which is below an activation temperature at which activation of the exhaust purification catalyst is completed.

In the foregoing aspect, the reaction amount estimation means may estimate the reaction amount of the exhaust purification reaction by comparing a state of exhaust gas before passage through the exhaust purification catalyst and a state of exhaust gas after passage through the exhaust purification catalyst.

As the degradation of the exhaust purification catalyst advances, the exhaust purification reaction comes to less readily occur, and the catalyst bed temperature at which the exhaust purification reaction begins to occur becomes higher. Then, when the catalyst bed temperature is within the temperature range below the activation temperature in which the amount of the reaction on the exhaust purification catalyst increases as the catalyst bed temperature rises, the reaction amount becomes the less the more advanced the degradation is, even if the catalyst bed temperature remains the same. Therefore, when the catalyst bed temperature is within this temperature range, the degradation of the exhaust purification catalyst can be determined based on the relation between the catalyst bed temperature and the amount of the reaction.

Besides, in the temperature range below the activation temperature in which the amount of the reaction on the exhaust purification catalyst increases as the catalyst bed temperature rises, the maximum value of the amount of the reaction on the exhaust purification catalyst is smaller than in a temperature range higher than or equal to the activation temperature. Therefore, in this temperature range, even in the case where the amounts of reactants supplied to the exhaust purification catalyst are small, it does not often happen that the reactants entirely react, so that differences in the amount of reaction based on differences in the degree of catalyst degradation can be detected. Therefore, according to this construction, the degradation of the exhaust purification catalyst can be determined based on differences in the amount of the reaction even in the case where the amounts of reactants supplied to the NOx storage reduction catalyst are small.

In the foregoing aspect, the degradation determination means may determine a degree of degradation of the exhaust purification catalyst to be greater if the reaction amount estimated by the reaction amount estimation means when the catalyst bed temperature estimated by the catalyst bed temperature estimation means is substantially equal to a predetermined temperature is smaller.

As the catalyst degradation advances, the amount of the exhaust purification reaction at a fixed catalyst bed temperature becomes smaller, the degree of degradation of the exhaust purification catalyst can be determined to be the greater the smaller the amount of the reaction estimated when the estimated catalyst bed temperature becomes substantially equal to a predetermined temperature, as in the foregoing construction.

In the foregoing aspect, the degradation determination means may determine that the exhaust purification catalyst is normal when the reaction amount estimated by the reaction amount estimation means when the catalyst bed temperature estimated by the catalyst bed temperature estimation means is substantially equal to a predetermined temperature is greater than or equal to a predetermined reaction amount. On the other hand, the degradation determination means may determine that the exhaust purification catalyst is abnormal when the reaction amount is less than the predetermined reaction amount.

According to the foregoing construction, based on the reaction amount estimated when the estimated catalyst bed temperature becomes substantially equal to a predetermined temperature, it can be determined that the exhaust purification catalyst is normally functioning, that is, a normality determination can be made, when the reaction amount is greater than or equal to a predetermined reaction amount. On the other hand, when the reaction amount is less than a predetermined reaction amount, it can be determined that there is a possibility of the function of the exhaust purification catalyst having declined due to advancement of the degradation of the exhaust purification catalyst.

In the foregoing aspect, the degradation determination means may determine that the exhaust purification catalyst is normal if the reaction amount estimated by the reaction amount estimation means when the catalyst bed temperature estimated is in a predetermined temperature range that is in the temperature range becomes greater than or equal to a predetermined reaction amount. On the other hand, the degradation determination means may determine that the exhaust purification catalyst is abnormal if the reaction amount does not become greater than or equal to the predetermined reaction amount although the catalyst bed temperature estimated rises to above the predetermined temperature range.

According to the foregoing construction, in the case where the reaction amount estimated when the estimated catalyst bed temperature is within the predetermined temperature range has risen to a predetermined reaction amount, it is instantaneously determined that the catalyst is normal. Therefore, the determination can be performed without a need to wait for the catalyst bed temperature THC to rise to a predetermined temperature, and therefore it can be determined during an earlier period that the catalyst is normal. On the other hand, in the case where the estimated reaction amount is less than a predetermined amount although the estimated catalyst bed temperature has risen to above a predetermined temperature range, there is a possibility of the exhaust purification catalyst has become degraded, and is not normally functioning. Therefore, based on the foregoing constant, it can be determined that the catalyst is abnormal.

In the foregoing aspect, the degradation determination means may determine a degree of degradation of the exhaust purification catalyst to be greater if the catalyst bed temperature estimated by the catalyst bed temperature estimation means when the reaction amount estimated by the reaction amount estimation means is substantially equal to a predetermined reaction amount is higher.

As stated above, the more advanced the degradation of the exhaust purification catalyst, the higher the catalyst bed temperature at which the exhaust purification reaction begins to occur becomes, and the higher the catalyst bed temperature at which the amount of the exhaust purification reaction reaches a predetermined reaction amount becomes. Therefore, as in the foregoing construction, the degree of degradation of the exhaust purification catalyst can be determined to be the greater the higher the catalyst bed temperature estimated when the estimated reaction amount becomes substantially equal to the predetermined reaction amount.

In the foregoing aspect, the degradation determination means may determine that the exhaust purification catalyst is normal when the catalyst bed temperature estimated by the catalyst bed temperature estimation means when the reaction amount estimated by the reaction amount estimation means becomes substantially equal to a predetermined reaction amount is less than a predetermined temperature. On the other hand, the degradation determination means may determine that the exhaust purification catalyst is abnormal when the catalyst bed temperature is greater than or equal to the predetermined temperature.

According to the foregoing construction, based on the catalyst bed temperature estimated when the estimated reaction amount becomes substantially equal to the predetermined reaction amount, it can be determined that the exhaust purification catalyst is normally functioning when the catalyst bed temperature is less than a predetermined temperature. On the other hand, when the catalyst bed temperature is higher than or equal to the predetermined temperature, it can be determined that there is a possibility of the function of the exhaust purification catalyst having declined due to advancement of the degradation of the exhaust purification catalyst.

In the foregoing aspect, the degradation determination means may determine that the exhaust purification catalyst is normal if the catalyst bed temperature estimated by the catalyst bed temperature estimation means when the reaction amount estimated by the reaction amount estimation means is in a predetermined reaction amount range is less than a predetermined temperature. On the other hand, the degradation determination means may determine that the exhaust purification catalyst is abnormal when the catalyst bed temperature is greater than or equal to the predetermined temperature. Then, the predetermined reaction amount range may be a range in which the reaction amount of the exhaust purification reaction is increasing.

In the foregoing aspect, the catalyst bed temperature estimation means and the reaction amount estimation means may include an upstream-side exhaust gas temperature sensor that is provided at a site in the exhaust passageway on an upstream side of the exhaust purification catalyst and that detects temperature of exhaust gas introduced into the exhaust purification catalyst, and a downstream-side exhaust gas temperature sensor that is provided at a site in the exhaust passageway on a downstream side of the exhaust purification catalyst and that detects the temperature of exhaust gas having passed through the exhaust purification catalyst. The catalyst bed temperature estimation means may estimate the catalyst bed temperature of the exhaust purification catalyst to be higher if an upstream-side exhaust gas temperature detected by the upstream-side exhaust gas temperature sensor is higher. The reaction amount estimation means may estimate the reaction amount of the exhaust purification reaction on the exhaust purification catalyst to be larger if a downstream-side exhaust gas temperature detected by the downstream-side exhaust gas temperature sensor is higher by a greater amount than the upstream-side exhaust gas temperature detected by the upstream-side exhaust gas temperature sensor.

Since the catalyst bed temperature of the exhaust purification catalyst changes depending on the heat exchange with the exhaust gas introduced into the exhaust purification catalyst, the catalyst bed temperature becomes the higher the higher the temperature of the exhaust gas introduced into the exhaust purification catalyst is. That is, the exhaust gas temperature at the upstream side of the exhaust purification catalyst and the catalyst bed temperature have high correlation. Besides, when the exhaust purification reaction is occurring, heat of the reaction raises the temperature of exhaust gas while the exhaust gas passes through the exhaust purification catalyst. That is, the temperature of the exhaust gas that has passed through the exhaust purification catalyst and the reaction amount of the exhaust purification reaction have high correlation. Therefore, if exhaust gas temperature sensors are provided at a site in the exhaust passageway on the upstream side of the exhaust purification catalyst and a site in the exhaust passageway on the downstream side of the exhaust purification catalyst as in the foregoing construction, the catalyst bed temperature and the reaction amount of the exhaust purification reaction can be estimated based on the upstream-side exhaust gas temperature and the downstream-side exhaust gas temperature detected by these exhaust gas temperature sensors. Concretely, the catalyst bed temperature can be estimated to be the higher the higher the upstream-side exhaust gas temperature is, and the heat of reaction of the exhaust purification catalyst and therefore the reaction amount of the exhaust purification reaction can be estimated to be the greater the more the downstream-side exhaust gas temperature exceeds the upstream-side exhaust gas temperature.

In the foregoing aspect, the catalyst bed temperature estimation means may further include outside air temperature detection means for detecting outside air temperature, and may correct the catalyst bed temperature of the exhaust purification catalyst estimated based on the upstream-side exhaust gas temperature so that the catalyst bed temperature becomes lower when the outside air temperature detected by the outside air temperature detection means is lower.

Due to the heat exchange between the exhaust purification catalyst and the outside air, a portion of the amount of heat possessed by the exhaust purification catalyst is taken away by the outside air. Therefore, even in the case where the temperature of the exhaust gas introduced into the exhaust purification catalyst remain the same and the amount of heat given to the exhaust purification catalyst from the exhaust gas remains the same, the catalyst bed temperature becomes the lower the lower the outside air temperature. Therefore, in the foregoing construction, the outside air temperature detection means is provided, and the catalyst bed temperature is corrected based on the outside air temperature detected by the outside air temperature detection means so that the estimated becomes lower when the outside air temperature is lower. The adoption of this construction makes is possible to more accurately estimate the catalyst bed temperature by taking into account the amount of heat taken away from the outer periphery side of the exhaust gas purification catalyst.

In the foregoing aspect, the catalyst bed temperature estimation means may include vehicle speed detection means for detecting vehicle speed, and may correct the catalyst bed temperature of the exhaust purification catalyst estimated based on the upstream-side exhaust gas temperature so that the catalyst bed temperature becomes lower when the vehicle speed detected is higher.

When the vehicle speed is high, the amount of outside air that contacts an outer peripheral surface of the exhaust purification catalyst per unit time increases, so that the heat exchange between the exhaust purification catalyst and outside air is accelerated. Therefore, the higher the vehicle speed, the more the catalyst bed temperature declines. Hence, in this construction, the catalyst bed temperature is corrected so that the estimated catalyst bed temperature is the lower the higher the vehicle speed is. The adoption of this construction makes is possible to more accurately estimate the catalyst bed temperature by taking into account changes in the amount of heat taken away from the outer periphery side of the exhaust purification catalyst in association with changes in the vehicle speed.

In order to more accurately estimate the catalyst bed temperature of the exhaust purification catalyst, the catalyst bed temperature estimation means may further include outside air temperature detection means for detecting outside air temperature, and may correct the catalyst bed temperature of the exhaust purification catalyst estimated based on the upstream-side exhaust gas temperature so that the catalyst bed temperature becomes lower when the outside air temperature detected by the outside air temperature detection means is lower, and the catalyst bed temperature estimation means may include vehicle speed detection means for detecting vehicle speed, and may correct the catalyst bed temperature of the exhaust purification catalyst estimated based on the upstream-side exhaust gas temperature so that the catalyst bed temperature becomes lower when the vehicle speed detected is higher. In short, the catalyst bed temperature may be corrected with reference to both the outside air temperature and the vehicle speed.

In the foregoing aspect, the device for determining degradation may further include temperature raise control means for, in association with determination of the degradation of the exhaust purification catalyst, executing a temperature raise control of raising the catalyst bed temperature of the exhaust purification catalyst by raising the temperature of exhaust gas introduced into the exhaust purification catalyst by oxidisation heat that is produced by an oxidation reaction caused by supplying unburned fuel to an oxidation catalyst that is provided at a site in the exhaust passageway on an upstream side of the exhaust purification catalyst.

A method for determining degradation of a vehicle exhaust purification catalyst degradation determination method that includes: estimating catalyst bed temperature of an exhaust purification catalyst that is provided in an exhaust passageway of an internal combustion engine; estimating reaction amount of an exhaust purification reaction on the exhaust purification catalyst; and determining degradation of the exhaust purification catalyst based on a relation between the estimated catalyst bed temperature and the estimated reaction amount of the exhaust purification reaction when the catalyst bed temperature is in a temperature range in which the reaction amount on the exhaust purification catalyst increases as the catalyst bed temperature rises and which is below an activation temperature at which activation of the exhaust purification catalyst is completed.

According to these aspects of the invention, the temperature raise control of raising the catalyst bed temperature of the exhaust purification catalyst is executed in association with determination of the degradation of the exhaust purification catalyst. Therefore, the catalyst bed temperature rapidly rises, and the amount of the exhaust purification reaction rapidly increases. As a result, the catalyst bed temperature or the amount of the exhaust purification reaction comes to reach, in a short time, a predetermined value provided for determining the degradation of the exhaust purification catalyst, so that the degradation determination regarding the exhaust purification catalyst can be completed in an early period.

### BRIEF DESCRIPTION OF THE DRAWINGS

The foregoing and further objects, features and advantages of the invention will become apparent from the following description of preferred embodiments with reference to the accompanying drawings, wherein like numerals are used to represent like elements and wherein:
FIG. 1 is a schematic diagram showing a general construction of a diesel engine in accordance with a first embodiment of the invention;
FIG. 2 a flowchart showing a flow of a degradation determination process in accordance with the first embodiment;
FIG. 3 is a map showing relations among the upstream-side exhaust gas temperature, the outside air temperature, and the catalyst bed temperature;
FIG 4 is a graph showing changes in a relation between the catalyst bed temperature and the temperature difference in association with the progress of degradation of the catalyst;
FIG. 5 is a flowchart showing a flow of a degradation determination process in accordance with a second embodiment;
FIG. 6 is a graph showing changes in a relation between the catalyst bed temperature and the temperature difference in accordance with the progress of degradation of the catalyst;
FIG. 7 is a map showing a relation between the temperature difference and the degree of degradation of the catalyst when the catalyst bed temperature has become substantially equal to a predetermined criterion temperature;
FIG. 8 is a flowchart showing a flow of a degradation determination process in accordance with a third embodiment;
FIG. 9 is a graph showing changes in a relation between the catalyst bed temperature and the temperature difference in association with the progress of degradation of the catalyst;
FIG. 10 is a map showing a relation between the catalyst bed temperature and the degree of degradation of the catalyst when the temperature difference has become substantially equal to the predetermined criterion temperature difference;
FIG 11 is a map showing a relation between the catalyst bed temperature and the temperature difference of an exhaust purification catalyst that has a reference degree of degradation;
FIG. 12 is an illustrative diagram showing a relation between the amount of rise in temperature and the degree of degradation of a catalyst in the case where the amount of reactants is large, and illustrating a related-art degradation determination method; and
FIG. 13 is an illustrative diagram showing a relation between the amount of rise in temperature and the degree of catalyst degradation in the case where the amount of reactants is small.

### DETAILED DESCRIPTION OF EMBODIMENTS

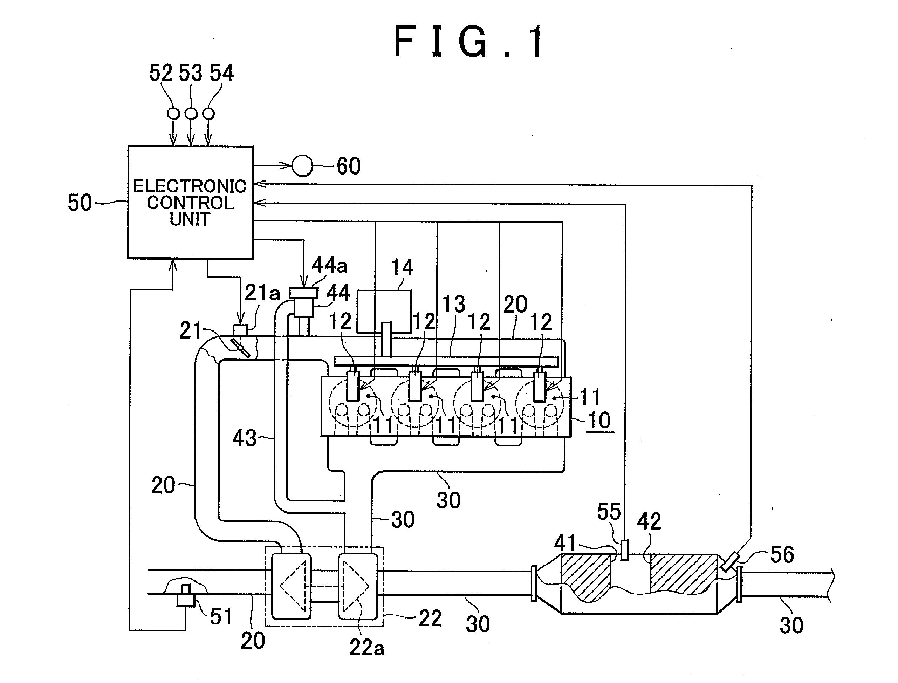

A first embodiment in which the device for determining degradation of a vehicle exhaust purification catalyst of the invention is embodied as an electronic control unit that generally controls a vehicle equipped with a diesel engine will be described with reference to FIGS. 1 to 4.

FIG. 1 shows a general construction of an electronic control unit 50 in accordance with the first embodiment, and a diesel engine 10 that is an object to be controlled by an electronic control unit 50. As shown in FIG. 1, an intake passageway 20 and an exhaust passageway 30 are connected to the diesel engine 10. The intake passageway 20 is provided with an intake throttle valve 21 that is opened and closed by an electric motor 21a. By altering the opening degree of the intake throttle valve 21, the amount of air introduced into each combustion chamber 11 is adjusted.

The combustion chamber 11 of each cylinder of the diesel engine 10 is provided with a fuel injection valve 12. These fuel injection valves 12 are connected to a common rail 13, and injects the fuel charged in the common rail 13 into the corresponding combustion chambers 11. Incidentally, the common rail 13 is pressure-fed with fuel from a fuel tank (not shown) by a supply pump 14.

As shown in FIG. 1, the intake passageway 20 and the exhaust passageway 30 are connected to a turbocharger 22. The turbocharger 22 pressurises the air in the intake passageway 20 and sends it into the combustion chambers 11 by rotating a turbine 22a through the use of energy of the exhaust gas that flows in the exhaust passageway 30.

An exhaust gas recirculation passageway 43 is connected to a site on the exhaust passageway 30 on the upstream side of the turbocharger 22. The exhaust gas recirculation passageway 43 is linked to the intake passageway 20 so as to recirculate a part of the exhaust gas in the exhaust passageway 30 into the intake passageway 20. The exhaust gas recirculation passageway 43 is provided with an EGR valve 44 that is opened and closed by a linear solenoid 44a. By altering the opening degree of the EGR valve 44, the amount of exhaust gas recirculated from the exhaust passageway 30 into the intake passageway 20 can be adjusted.

Besides, a catalytic converter 41 and a PM filter 42 are provided at a portion of the exhaust passageway 30 on the downstream side of the turbocharger 22. The catalytic converter 41 and the PM filter 42 are each loaded with a NOx storage reduction catalyst.

The NOx storage reduction catalyst stores NOx during a lean state, and reduces NOx into N₂, CO₂ and H₂O by reacting the stored NOx with CO, and HC, that is, unburned fuel fraction, which are contained in exhaust gas.

The PM filter 42 has a monolithic structure that is formed from a porous material, and traps particulate matter (PM) that contains soot and the like as main components from exhaust gas. Since the PM filter is also loaded with a NOx storage reduction catalyst as described above, the PM trapped by the PM filter 42 is oxidised and removed by the oxidising action of the NOx storage reduction catalyst.

Besides, as shown in FIG. 1, an upstream-side exhaust gas temperature sensor 55 is provided at a site on the exhaust passageway 30 on the upstream side of the PM filter 42, more specifically, between the PM filter 42 and the catalytic converter 41. Besides, a downstream-side exhaust gas temperature sensor 56 is provided at a site on the exhaust passageway 30 on the downstream side of the PM filter 42. These exhaust gas temperature sensors 55, 56 detect the upstream-side exhaust gas temperature THup that is the temperature of the exhaust gas that has passed through the catalytic converter 41 and is to be introduced into the PM filter 42, and the downstream-side exhaust gas temperature THlow that is the temperature of the exhaust gas that has passed through the PM filter 42.

Output signals of the exhaust gas temperature sensors 55, 56 are taken in by the electronic control unit 50 that generally controls the diesel engine 10. The electronic control unit 50 includes a digital computer that is equipped with a CPU, a ROM, a RAM, etc., and drive circuits for driving various devices of the diesel engine 10. Besides the exhaust gas temperature sensors 55, 56, various sensors and the like are connected to the electronic control unit 50, including an air flow meter 51 that is provided on the intake passageway 20 and that detects the intake air amount GA and the outside air temperature THA, a vehicle speed sensor 52 that detects the vehicle speed SPD, a water temperature sensor 53 that detects the engine cooling water temperature THW of the diesel engine 10, a rotation speed sensor 54 that detects the engine rotation speed NE, etc. The output signals of these sensors 51 to 56 are taken in by the electronic control unit 50.

Besides, a catalyst abnormality lamp 60 provided in a driver's seat-side instrument panel is connected to the electronic control unit 50. The catalyst abnormality lamp 60 is lit on by the electronic control unit 50, when the NOx storage reduction catalyst is determined to be not normally functioning through a degradation determination process described below.

The electronic control unit 50 executes a fuel injection timing control and a fuel injection amount control by using the fuel injection valves 12 based on the output signals from the sensors 51 to 56. Besides, the electronic control unit 50 also executes an EGR control in which the amount of exhaust gas recirculated into the intake passageway 20 is regulated by adjusting the opening degree of the EGR valve 44 and the opening degree of the intake throttle valve 21, and also executes a fuel addition process as a part of the exhaust purification process in which HC, that is, an unburned fuel fraction, is supplied as a reactant to the catalytic converter 41 and the PM filter 42.

Generally, the exhaust purification catalyst gradually degrades when used for a long time, and its exhaust purification capability accordingly declines. As for the aforementioned NOx storage reduction catalyst, as degradation progresses, the storage of NOx becomes difficult even in a lean state, or the reduction of NOx becomes difficult even in a rich state. If such a degraded catalyst continues to be used, the property of exhaust gas deteriorates. In order to restrain such deterioration, there is a need of appropriate maintenance, such as replacement of the degraded catalyst, or the like. In order to perform such maintenance at an appropriate timing, it is necessary to accurately achieving the state of degradation of the catalyst.

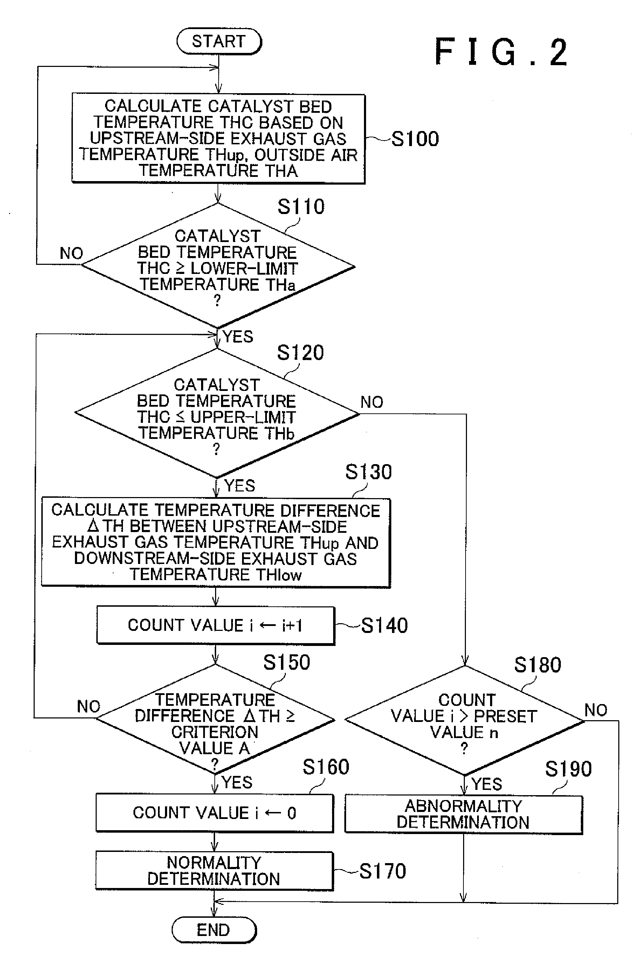

Therefore, the electronic control unit 50 in this embodiment executes a degradation determination process of determining the state of degradation of the NOx storage reduction catalyst based on the amount of the heat produced by the reaction at the PM filter 42. Hereinafter, a control in accordance with the degradation determination process will be described with reference to FIGS. 2 to 4. FIG 2 is a flowchart showing a flow of the degradation determination process in accordance with the first embodiment. This process is executed by the electronic control unit 50 during the operation of the engine.

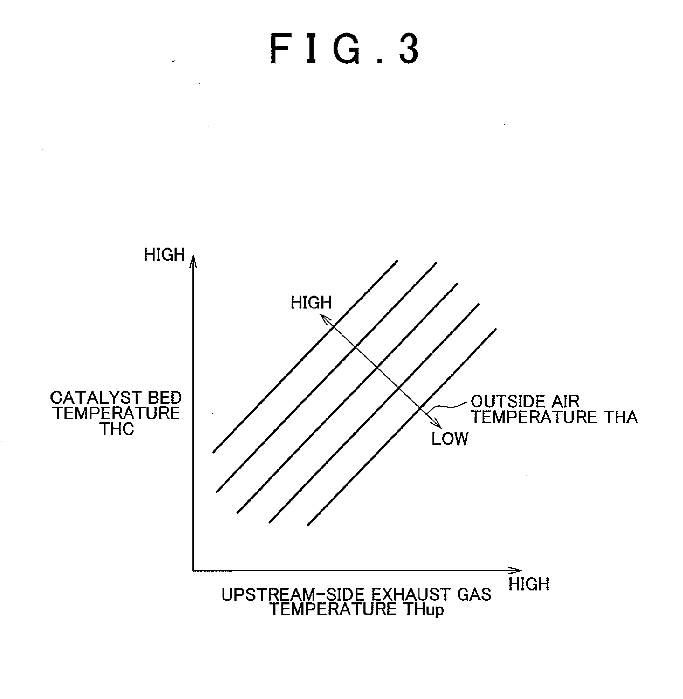

As shown in FIG. 2, the electronic control unit 50 in step S100 firstly calculates a catalyst bed temperature THC based on the upstream-side exhaust gas temperature THup and the outside air temperature THA with reference to a computation map that is stored in the ROM beforehand. As shown in FIG. 3, this computation map is set, so that the catalyst bed temperature THC becomes the higher the higher the upstream-side exhaust gas temperature THup is, and so that the catalyst bed temperature THC becomes the lower the lower the outside air temperature THA is even in the case where the upstream-side exhaust gas temperature THup remains constant.

After the electronic control unit 50 calculates the catalyst bed temperature THC in step S100, the process proceeds to step S110, in which the electronic control unit 50 determines whether the calculated catalyst bed temperature THC is higher than or equal to a lower-limit temperature THa. The lower-limit temperature THa is set based on results of experiments performed beforehand, more specifically, based on the catalyst bed temperature at which the NOx storage reduction catalyst, that is in a state of being able to normally function, begins to accelerate an oxidation reaction. If in step S110 the catalyst bed temperature THC is determined to be less than the lower-limit temperature THa (NO in step S110), the process returns to step S100, so that the electronic control unit 50 repeats the process of steps S100 and step S110.

On the other hand, if the catalyst bed temperature THC rises during operation of the engine and in step S110 that the catalyst bed temperature THC is determined to be higher than or equal to the lower-limit temperature THa (YES in step S110), the process proceeds to step S120. Then in step S120, the electronic control unit 50 determines whether the catalyst bed temperature THC is lower than or equal to an upper-limit temperature THb. The upper-limit temperature THb is set at a temperature that is higher than the lower-limit temperature THa and lower than the activation temperature THact of the NOx storage reduction catalyst. That is, in step S120, the electronic control unit 50 determines whether the catalyst bed temperature THC is within a predetermined temperature range that is a temperature range below the activation temperature THact in which the amount of the NOx reduction reaction occurring on the NOx storage reduction catalyst increases as the catalyst bed temperature THC rises.

If in step S120 the catalyst bed temperature THC is determined to be lower than or equal to the upper-limit temperature THb (YES in step S120), that is, if the catalyst bed temperature THC is determined to be within the foregoing predetermined temperature range, the process proceeds to step S130. Then in step S130, the electronic control unit 50 calculates a temperature difference ΔTH between the upstream-side exhaust gas temperature THup and the downstream-side exhaust gas temperature THlow by subtracting the upstream-side exhaust gas temperature THup from the downstream-side exhaust gas temperature THlow.

After the electronic control unit 50 calculates temperature difference ΔTH, the process proceeds to step S140, in which a count value i stored in the RAM is incremented by "1". Then, the process proceeds to step S150, in which the electronic control unit 50 determines whether the temperature difference ΔTH calculated in step S130 is higher than or equal to a criterion value A. This criterion value A is set beforehand based on results of experiments or the like at such a value that the amount of reaction of the oxidation reaction on the PM filter 42 can be determined to be greater than or equal to a predetermined amount and that the NOx storage reduction catalyst is normally functioning.

If in step S150 the temperature difference ΔTH is determined to be higher than or equal to the criterion value A (YES in step S150), the process proceeds to step S160, in which the count value i stored in the RAM is reset to "0". Then, the process proceeds to step S170, in which the electronic control unit 50 makes a normality determination that the NOx storage reduction catalyst in the PM filter 42 is normally functioning, and then ends the degradation determination process.

On the other hand, if the temperature difference ΔTH is determined to be less than the criterion value A (NO in step S150), the process returns to step S120. Specifically, when the catalyst bed temperature THC is within the predetermined temperature range from the lower-limit temperature THa to the upper-limit temperature THb, the electronic control unit 50 repeats the process of steps S120 to 150, and constantly monitors whether the temperature difference ΔTH is higher than or equal to the criterion value A. Then, when the temperature difference ΔTH becomes higher than or equal to the criterion value A while the catalyst bed temperature THC is within the temperature range, the process instantaneously proceeds to step S160 and then to step S170, in which the electronic control unit 50 makes a normality determination.

On the other hand, if before the normality determination is made, in step S120 that the catalyst bed temperature THC is determined to be greater than the upper-limit temperature THb (NO in step S120), that is, if the catalyst bed temperature THC rises to above the predetermined temperature range but the temperature difference ΔTH does not become greater than or equal to the criterion value A, the process proceeds to step S180.

Then in step S180, the electronic control unit 50 determines whether the count value i is greater than a predetermined value n. That is, based on whether the count value i is greater than the predetermined value n, whether the determination process of steps S120 to S150 has been repeated at least n times is determined.

If in step S180 the count value i is determined to be greater than the predetermined value n (YES in step S 180), the electronic control unit 50 determines that while the determination process has been executed at least n times, the temperature difference ΔTH has not become greater than or equal to the criterion value A although the catalyst bed temperature THC has risen to exceed the predetermined temperature range, then the process proceeds to step S190. In step S190, the electronic control unit 50 makes a degradation determination that the NOx storage reduction catalyst has degraded. After the degradation determination is made in this manner, the electronic control unit 50 lights on the catalyst abnormality lamp 60, and ends the process.

On the other hand, if in step S180 the count value i is determined to be less than or equal to the predetermined value n (NO in step S180), the electronic control unit 50 ends this process without making either the normality determination or the abnormality determination since the determination process has not been sufficiently performed while the temperature is in the predetermined temperature range. Therefore, if the catalyst bed temperature THC is higher than or equal to the upper-limit temperature THb immediately after the engine starts operating, for example, at the time of restart of the engine immediately following a stop thereof, or the like, this process is ended without either the normality determination or the degradation determination being made.

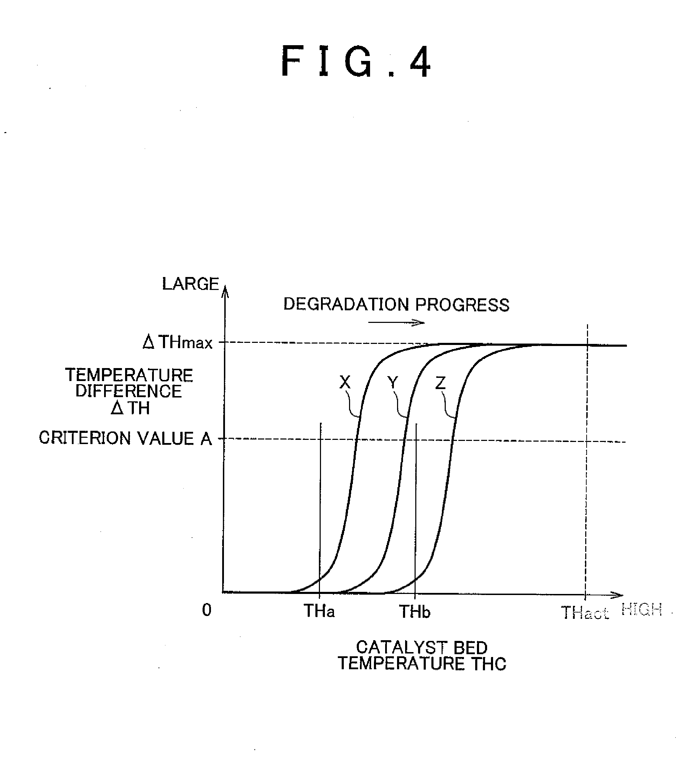

Next, an operation of the degradation determination process in accordance with this embodiment will be described with reference to FIG 4. FIG. 4 is a graph showing how the relation between the catalyst bed temperature THC and the temperature difference ΔTH changes with the progress of the catalyst degradation. In FIG 4, a state in which the degree of catalyst degradation is the smallest is shown by a solid line X, then the state of degree of catalyst degradation is greater in the order of a solid line Y and a solid line Z.

As shown in FIG. 4, as the degradation advances, the catalyst bed temperature THC at which the oxidation reaction begins to occur becomes gradually higher, and the amount of reaction at the same catalyst bed temperature THC becomes smaller, and the temperature difference ΔTH becomes smaller.

It is to be noted herein that in the case where reactants supplied to the PM filter 42, that is, NOx, HC and the like that are contained in exhaust gas, are small in amount, the reactants entirely react, so that the temperature difference ΔTH increases only to ΔTHmax even in the case where the degree of degradation is the smallest as shown by the solid line X. Therefore, when the catalyst bed temperature THC is n the temperature range higher than or equal to the activation temperature THact, the amount of the temperature difference ΔTH detected becomes substantially equal to ΔTHmax in any one of the states shown by the solid line X, the solid line Y and the solid line Z, so that determining the degree of degradation based on the temperature difference ΔTH is difficult.

However, in the degradation determination process of this embodiment, whether the temperature difference ΔTH becomes greater than or equal to the criterion value A is determined while the catalyst bed temperature THC is within a predetermined temperature range from the lower-limit temperature THa to the upper-limit temperature THb. In this temperature range, the maximum value of the amount of reaction on the NOx storage reduction catalyst is smaller than in the temperature range higher than or equal to the activation temperature THact. Therefore, in the range from the lower-limit temperature THa to the upper-limit temperature THb, the reactants less likely to entirely react, so that the variation in the temperature difference ΔTH based on differences in the degree of degradation can be detected as seen in FIG 4.

According to the degradation determination process of this embodiment, in the case where the temperature difference ΔTH is greater than or equal to the criterion value A while the catalyst bed temperature THC is within the foregoing predetermined temperature range, that is, in the case of the state shown by the solid line X or the solid line Y, the normality determination is made at the time point when the temperature difference ΔTH becomes greater than or equal to the criterion value A. As shown in FIG. 4, during the state shown by either one of the solid line X and the solid line Y, the temperature difference ΔTH exceeds the criterion value A when the catalyst bed temperature THC is in the range between the catalyst bed temperature THa and THb. On the other hand, during the state shown by the solid line Z, even after the catalyst bed temperature THC exceeds the upper-limit temperature THb, the temperature difference ΔTH does not become higher than or equal to the criterion value A, so that the abnormality determination can be made. As shown in FIG. 4, during the state of the solid line Z, the temperature difference ΔTH does not exceed the criterion value A when the catalyst bed temperature THC is in the range between the catalyst bed temperatures THa and THb.

Thus, in the degradation determination process of this embodiment, the degradation of the NOx storage reduction catalyst can be determined even in the case where the amounts of the reactants are small.

According to the first embodiment described above, the following effects can be achieved.

(1) If the degradation of the NOx storage reduction catalyst advances as described above, the oxidation reaction comes to less readily occur, and the catalyst bed temperature THC at which the oxidation reactions begin to occur becomes high. When the catalyst bed temperature THC is in a temperature range below the activation temperature THact in which the amount of the reaction on the PM filter 42 increases as the catalyst bed temperature THC rises, the amount of reaction becomes the less the more advanced the catalyst degradation is, even if the catalyst bed temperature THC remains the same. Therefore, while the catalyst bed temperature THC is in this temperature range below the activation temperature THact, the degradation of the exhaust purification catalyst can be determined based on the relation between the catalyst bed temperature THC and the amount of reaction.

Besides, in a temperature range below the activation temperature THact in which the amount of the reaction on the PM filter 42 increases as the catalyst bed temperature THC rises, the maximum value of the amount of the reaction on the PM filter is smaller than in the temperature range higher than or equal to the activation temperature THact. Therefore, in this temperature range, even in the case where the amount of reactants supplied to the NOx storage reduction catalyst is small, the reactants less likely to entirely react, so that differences in the amount of reaction based on differences in the degree of catalyst degradation can be detected. Therefore, according to the degradation determination process of this embodiment in which whether the temperature difference ΔTH becomes greater than or equal to the criterion value A is monitored while the catalyst bed temperature THC is in a predetermined temperature range that is set within the foregoing temperature range, the degradation of the NOx storage reduction catalyst can be determined based on differences in the amount of the reaction even in the case where the amount of reactants supplied to the NOx storage reduction catalyst is small.

(2) In the foregoing embodiment, in the case where the temperature difference ΔTH calculated when the catalyst bed temperature THC is within the predetermined temperature range becomes greater than or equal to the criterion value A, and where the amount of reaction increases to a predetermined amount of reaction, the catalyst is instantaneously determined to be normal. Therefore, the determination can be performed without waiting for the catalyst bed temperature THC to rise to a predetermined temperature, and therefore the determination can be made during an earlier period that the catalyst is normal. Besides, in the case where even after the catalyst bed temperature THC has risen to above the foregoing predetermined temperature range, the temperature difference ΔTH is less than the criterion value A, that is, the amount of reaction is less than a predetermined amount, then an abnormality determination that the NOx storage reduction catalyst has degraded and is not normally functioning is made. Thus, according to the foregoing embodiment, a normality determination can be made in an early period. Besides, in the case where the temperature difference ΔTH does not reach the criterion value A even after the catalyst bed temperature THC has risen to above the foregoing predetermined temperature range, an abnormality determination can be precisely made based on this condition.

(3) Since the catalyst bed temperature THC of the NOx storage reduction catalyst changes due to the heat exchange with the exhaust gas that is introduced to the PM filter 42, the catalyst bed temperature THC is the higher the higher the temperature of the exhaust gas introduced to the PM filter 42 is. That is, the catalyst bed temperature THC and the exhaust gas temperature on the upstream side of the PM filter 42 have a high correlation. Besides, when an oxidation reaction is occurring, heat of the reaction raises the temperature of exhaust gas while the exhaust gas passes through the PM filter 42. Therefore, the temperature of the exhaust gas that has passed through the PM filter 42 and the amount of the oxidation reaction have a high correlation. In conjunction with this respect, in the foregoing embodiment, the exhaust gas temperature sensors 55, 56 are provided at a site on the exhaust passageway 30 on the upstream side of the PM filter 42 and a site on the exhaust passageway 30 on the downstream side of the PM filter 42, respectively. Therefore, based on the upstream-side exhaust gas temperature THup and the downstream-side exhaust gas temperature THlow detected by the exhaust gas temperature sensors 55, 56, the catalyst bed temperature THC and the amount of the reaction on the PM filter 42 can be estimated.

(4) In the foregoing embodiment, the outside air temperature THA detected by the air flow meter 51 is used as a basis for the following correction. That is, the catalyst bed temperature THC is corrected so that the catalyst bed temperature THC becomes the lower the lower the outside air temperature THA is, even when the upstream-side exhaust gas temperature THup remains constant. Therefore, by taking into account the amount of heat taken away from the outer periphery side of the PM filter 42 by outside air, the catalyst bed temperature THC can be more accurately estimated.

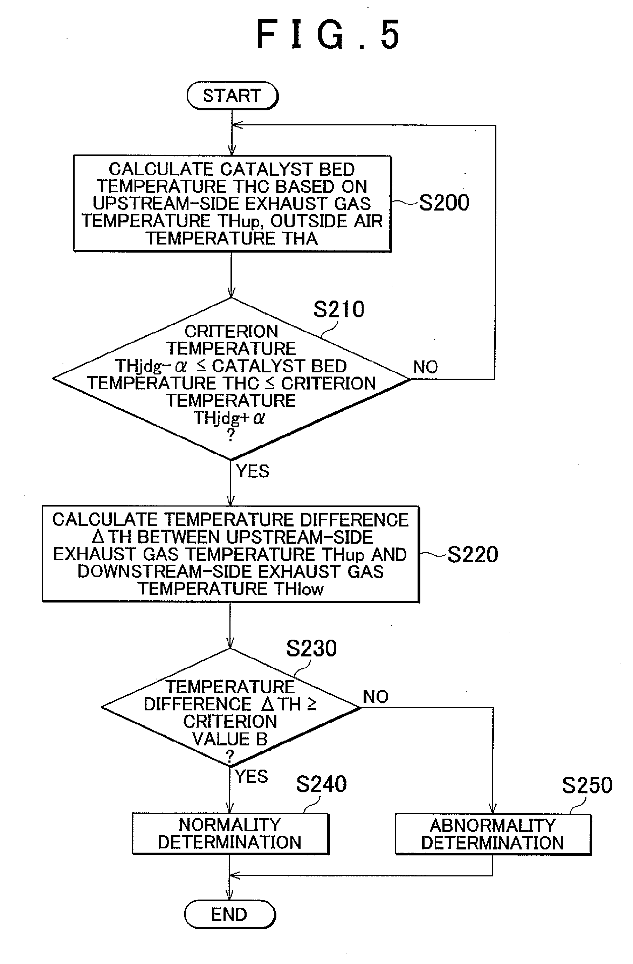

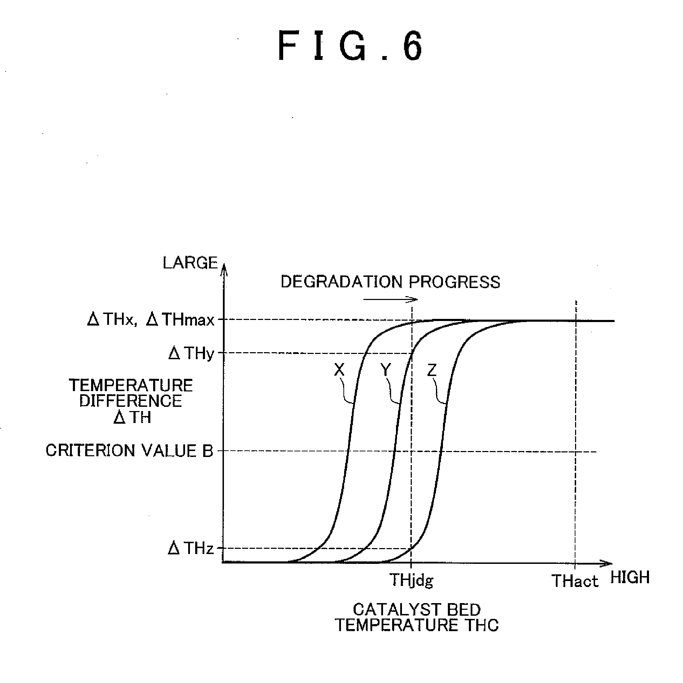

Hereinafter, a second embodiment of the invention will be described with reference to FIGS. 5 and 6. In the first embodiment, the degradation determination regarding the NOx storage reduction catalyst is performed based on whether the temperature difference ΔTH becomes greater than or equal to the criterion value A while the catalyst bed temperature THC is within a predetermined temperature range from the lower-limit temperature THa to the upper-limit temperature THb. In this embodiment, whether the NOx storage reduction catalyst has degraded is determined based on whether the calculated temperature difference ΔTH is greater than or equal to the criterion value B when the catalyst bed temperature THC becomes substantially equal to a predetermined criterion temperature THjdg while the catalyst bed temperature THC is within a temperature range below the activation temperature THact in which the amount of the exhaust purification reaction on the NOx storage reduction catalyst as the catalyst bed temperature THC rises.

Hereinafter, the descriptions of features of the second embodiment similar to those of the first embodiment will be omitted, and the degradation determination process in the second embodiment, which is different from that in the first embodiment, will be described. FIG 5 is a flowchart showing a flow of a degradation determination process in accordance with this embodiment. This sequenced process is executed by the electronic control unit 50 during operation of the engine, as in the first embodiment.

Firstly in step S200, the electronic control unit 50 calculates a catalyst bed temperature THC based on the upstream-side exhaust gas temperature THup and the outside air temperature THA, similarly to step S100 in the first embodiment.

Then, the process proceeds to step S210 in which the electronic control unit 50 determines whether the calculated catalyst bed temperature THC is substantially equal to a criterion temperature THjdg. This criterion temperature THjdg has been set at a temperature that is less than the activation temperature THact and that allows an oxidation reaction to occur in a certain amount of reaction on the NOx storage reduction catalyst that is in a state of being able to normally function. Concretely, in step S210, the electronic control unit 50 determines that the catalyst bed temperature THC has become substantially equal to the criterion temperature THjdg provided that the catalyst bed temperature THC is within a range from a value THjdg-α that is slightly smaller than the criterion temperature THjdg to a value THjdg+α that is slightly greater than the criterion temperature THjdg. Besides, the value of the criterion temperature THjdg and the value of α are set so that the values of THjdg+α and THjdg-α are within a temperature range below the activation temperature THact in which the amount of the exhaust purification reaction on the NOx storage reduction catalyst increases as the catalyst bed temperature THC rises.

If in step S210 the catalyst bed temperature THC is not determined to be within the range from the criterion temperature THjdg-α to the criterion temperature THjdg+α, and therefore is not substantially equal to the criterion temperature THjdg (NO in step S210), the process returns to step S200.

On the other hand, if in step S210 the catalyst bed temperature THC is determined to be within the range from criterion temperature THjdg-α to the criterion temperature THjdg+α, and therefore has become substantially equal to the criterion temperature THjdg (YES in step S210), the process proceeds to step S220.

Then in step S220, the electronic control unit 50 calculates a temperature difference between the upstream-side exhaust gas temperature THup and the downstream-side exhaust gas temperature THlow by subtracting the upstream-side exhaust gas temperature THup from the downstream-side exhaust gas temperature THlow. After the electronic control unit 50 calculates the temperature difference ΔTH occurring during the catalyst bed temperature THC becoming substantially equal to the criterion temperature THjdg, the process proceeds to step S230 in which the electronic control unit 50 determines whether the temperature difference ΔTH is greater than or equal to the criterion value B. The criterion value B is set at such a value that the oxidation reaction can be determined to be sufficiently occurring on the NOx storage reduction catalyst. That is, the NOx storage reduction catalyst is normally functioning if the temperature difference ΔTH is greater than or equal to the criterion value B when the catalyst bed temperature THC is substantially equal to the criterion temperature THjdg.

If in step S230 the temperature difference ΔTH is determined to be greater than or equal to the criterion value B (YES in step S230), the electronic control unit 50 determines based on the determination in step S230 that the NOx storage reduction catalyst is normally functioning. Then, the process proceeds to step S240 in which the electronic control unit 50 makes a normality determination. After making the normality determination, the electronic control unit 50 ends this process.

On the other hand, if in step S230 the temperature difference ΔTH is determined to be less than the criterion value B (NO in step S230), the electronic control unit 50 determines that the degradation of the NOx storage reduction catalyst has advanced so that the NOx storage reduction catalyst is not normally functioning since the amount of the reaction on the NOx storage reduction catalyst at the criterion temperature THjdg is small. Then, the process proceeds to step S250 in which the electronic control unit 50 makes a degradation determination.

After making the degradation determination in this manner, the electronic control unit 50 lights on the catalyst abnormality lamp 60, and then ends this process.

Next, operation of the degradation determination process in accordance with this embodiment will be described with reference to FIG. 6. FIG. 6 is a graph showing how the relation between the catalyst bed temperature THC and the temperature difference changes as the catalyst degradation progresses, as in FIG. 4. In FIG. 6, similarly to FIG. 4, the degree of degradation increases in an order of a solid line X, a solid line Y, and a solid line Z.

As described above, as the catalyst degradation advances, the catalyst bed temperature THC at which the oxidation reaction begins to occur becomes gradually higher, and the amount of reaction at a certain catalyst bed temperature THC becomes smaller, and the temperature difference ΔTH becomes smaller. Therefore, as shown in FIG. 6, the temperature difference ΔTH becomes the smaller the more advanced the catalyst degradation is.

In the degradation determination process in this embodiment, whether the NOx storage reduction catalyst has degraded is determined based on whether the temperature difference ΔTH calculated at the time of the catalyst bed temperature THC becoming substantially equal to the criterion temperature THjdg is greater than or equal to the criterion value B. Therefore, in the case where the temperature difference ΔTH is greater than or equal to the criterion value B when the catalyst bed temperature THC becomes substantially equal to the criterion temperature THjdg, that is, in the case of a state shown by the solid line X or the solid line Y as shown in FIG. 6, the normality determination is made based on this condition or situation. On the other hand, in the case of a state shown by the solid line Z, the temperature difference ΔTH at the time of the catalyst bed temperature THC becoming substantially equal to the criterion temperature THjdg is less than the criterion value B, an abnormality determination is made based on this condition or situation.

Thus, according to the second embodiment, the degradation of the NOx storage reduction catalyst can be determined even in the case where the amount of reactants is small, as in the first embodiment.

Incidentally, the second embodiment can also be carried out in appropriately modified forms as described below.

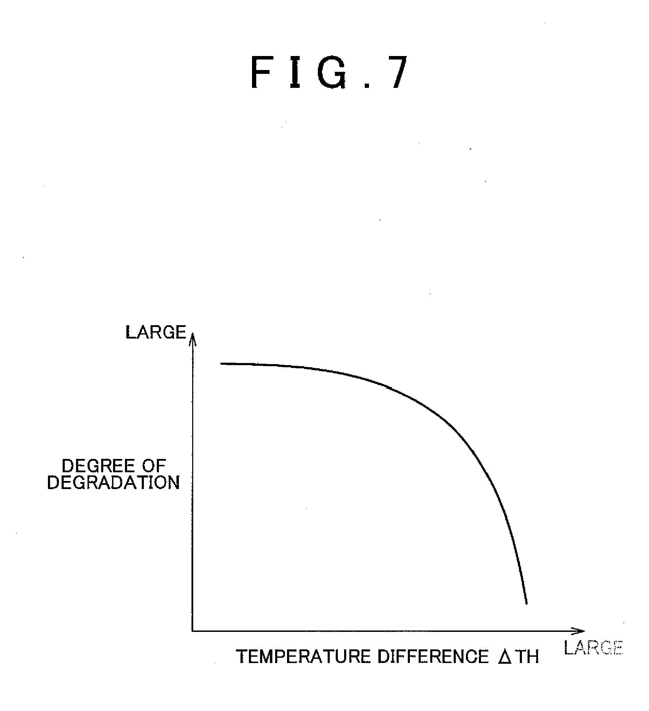

•As shown by ΔTHx, ΔTHy, ΔTHz in FIG. 6, the more advanced the catalyst degradation, the smaller the temperature difference ΔTH at the criterion temperature THjdg becomes. Therefore, the degree of degradation of the NOx storage reduction catalyst can be determined based on the temperature difference ΔTH occurring when the catalyst bed temperature THC becomes substantially equal to the criterion temperature THjdg, instead of the determination as to whether the temperature difference ΔTH occurring at the criterion temperature THjdg is greater than or equal to the criterion value B. For example, based on results of experiments or the like, a map that shows a relation between the degree of catalyst degradation and the temperature difference ΔTH at the time of the catalyst bed temperature THC becoming substantially equal to the criterion temperature THjdg as shown in FIG. 7 is created beforehand. Then, it suffices to quantitatively determine the degree of catalyst degradation with reference to the map so that a numerical value that shows the degree of degradation becomes the larger the smaller the temperature difference ΔTH occurring when the catalyst bed temperature THC becomes substantially equal to the criterion temperature THjdg. The adoption of this construction makes it possible to quantitatively estimate the degree of degradation of the NOx storage reduction catalyst. Based on this estimation, it becomes possible to, for example, calculate an expected period until the next maintenance, and inform a driver of the vehicle the expected period.

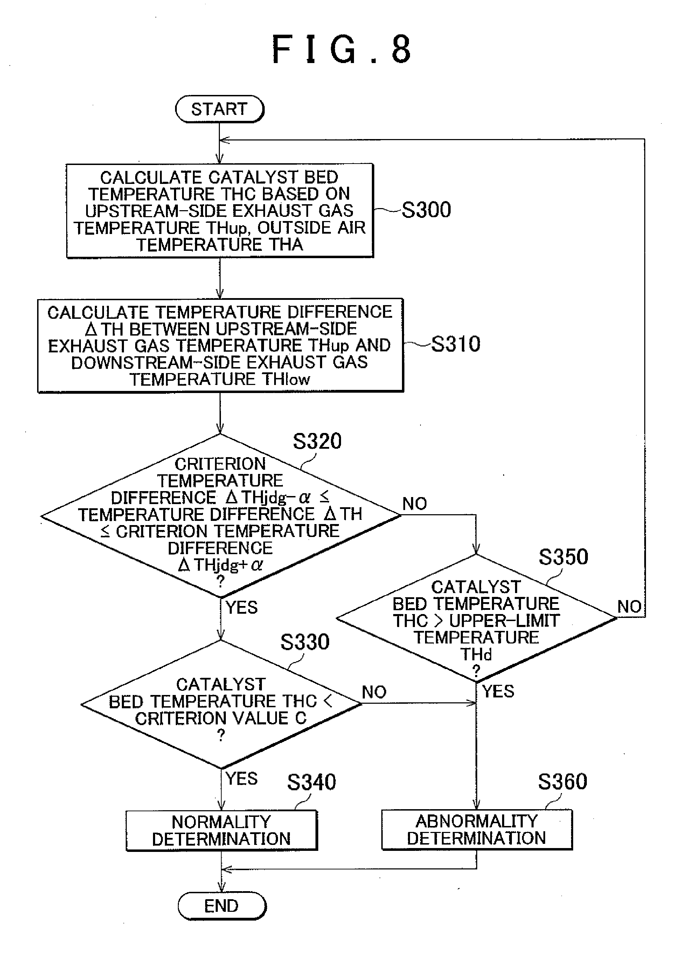

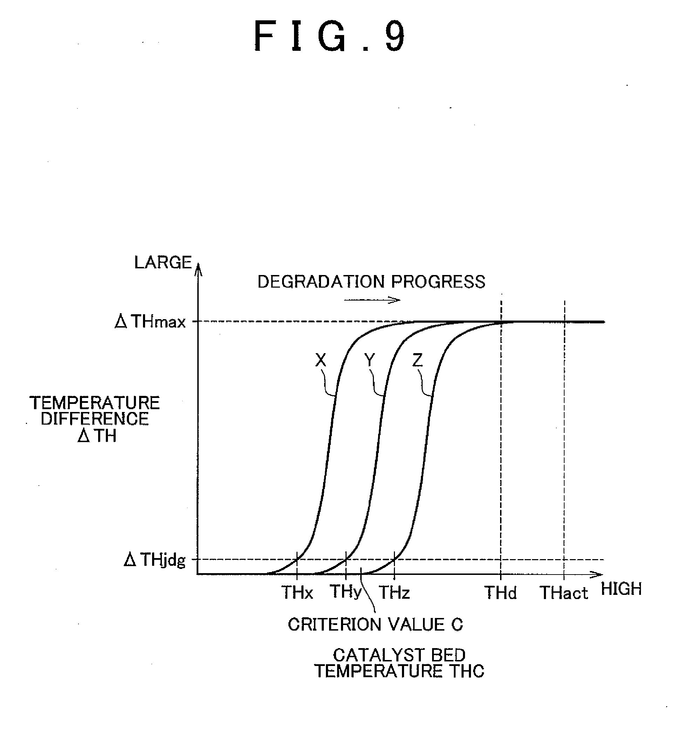

A third embodiment of the invention will be described below with reference to FIGS. 8 and 9. In the second embodiment, whether the NOx storage reduction catalyst has degraded is determined based on whether the temperature difference ΔTH calculated when the catalyst bed temperature THC reaches the predetermined criterion temperature THjdg is greater than or equal to the criterion value B, where the predetermined criterion temperature THjdg is within a temperature range below the activation temperature THact in which the amount of the exhaust purification reaction on the NOx storage reduction catalyst increases as the catalyst bed temperature THC rises. In the third embodiment, on the other hand, whether the NOx storage reduction catalyst has degraded is determined based on whether the catalyst bed temperature THC occurring when the temperature difference ΔTH becomes substantially equal to a predetermined criterion temperature difference ΔTHjdg while the catalyst bed temperature THC is within the foregoing temperature range is less than a criterion value C.

Hereinafter, the descriptions of features of the third embodiment similar to those of the first or second embodiment will be omitted, and the degradation determination process in the third embodiment, which is different from those in the first and second embodiments, will be described. FIG. 8 is a flowchart showing a flow of a degradation determination process in the third embodiment. This process is executed by the electronic control unit 50 during operation of the engine, similarly to the first and second embodiments.

As shown in FIG. 8, when this process starts, the electronic control unit 50 firstly in step S300 calculates the catalyst bed temperature THC based on the upstream-side exhaust gas temperature THup and the outside air temperature THA, as in step S 100 in the first embodiment and step S200 in the second embodiment.

Then, the process proceeds to step S310 in which the electronic control unit 50 calculates a temperature difference ΔTH between the upstream-side exhaust gas temperature THup and the downstream-side exhaust gas temperature THlow by subtracting the upstream-side exhaust gas temperature THup from the downstream-side exhaust gas temperature THlow. After the electronic control unit 50 calculates the temperature difference in this manner, the process proceeds to step S320 in which the electronic control unit 50 determines whether the temperature difference ΔTH is substantially equal to or has reached a criterion temperature difference ΔTHjdg.

The amount of the criterion temperature difference ΔTHjdg is set so as to make it possible to determine that an oxidation reaction is occurring in a certain amount on the NOx storage reduction catalyst provided that the temperature difference ΔTH is larger than the criterion temperature difference ΔTHjdg. In this embodiment, the criterion temperature difference ΔTHjdg is set to an amount as small as possible to determine that the oxidation reaction has begun on the NOx storage reduction catalyst in accordance with the temperature difference ΔTH reaching the criterion temperature difference ΔTHjdg. Concretely, in step S320, the electronic control unit 50 determines that the temperature difference ΔTH is substantially equal to the criterion temperature difference ΔTHjdg when the temperature difference ΔTH has become within a range from a value ΔTHjdg-α that is slightly smaller than the criterion temperature difference ΔTHjdg to a value ΔTHjdg+α that is slightly larger than the criterion temperature difference ΔTHjdg.

If in step S320 the temperature difference ΔTH is determined to be within the range from the criterion temperature difference ΔTHjdg-α to the criterion temperature difference ΔTHjdg+α, and therefore has become substantially equal to the criterion temperature difference ΔTHjdg (YES in step S320), the process proceeds to step S330.

In step S330, the electronic control unit 50 determines whether the present catalyst bed temperature THC is lower than the criterion value C. The criterion value C has been set at a value that makes it possible to determine that the degradation of the NOx storage reduction catalyst has not advanced and therefore the NOx storage reduction catalyst is normally functioning provided that the catalyst bed temperature THC occurring when the temperature difference ΔTH is substantially equal to the criterion temperature difference ΔTHjdg is smaller than the criterion value C.

If in step S330 the catalyst bed temperature THC, when the temperature difference ΔTH is substantially equal to the criterion temperature difference ΔTHjdg, is less than the criterion value C (YES in step S330), the electronic control unit 50 determines that the degradation has not advanced, and the process proceeds to step S340. Then, in step S340, the electronic control unit 50 makes a normality determination, then the process ends.

On the other hand, if in step S330 the catalyst bed temperature THC, when the temperature difference ΔTH becomes substantially equal to the criterion temperature difference ΔTHjdg, is determined to be greater than or equal to the criterion value C (NO in step S330), the electronic control unit 50 determines that the temperature at which the oxidation reaction begins to occur on the NOx storage reduction catalyst is rather high, and therefore the degradation has already advanced, and then the process proceeds to step S360. In step S360, the electronic control unit 50 makes an abnormality determination. After making the abnormality determination, the electronic control unit 50 lights on the catalyst abnormality lamp 60, and ends the process.

On the other hand, if in step S320 the temperature difference ΔTH is not determined to be within the range from the criterion temperature difference ΔTHjdg-α to the criterion temperature difference ΔTHjdg+α, and therefore has not become substantially equal to the criterion temperature difference ΔTHjdg (NO in step S320), the process proceeds to step S350.

In step S350, the electronic control unit 50 determines whether the present catalyst bed temperature THC is higher than an upper-limit temperature THd. The upper-limit temperature THd is set at a value that is greater than the aforementioned criterion value C. Therefore, if in step S350 the catalyst bed temperature THC is determined to be higher than the upper-limit temperature THd (YES in step S350), the electronic control unit 50 determines that the degradation of the NOx storage reduction catalyst has advanced so that the temperature difference ΔTH does not reach the criterion temperature difference ΔTHjdg although the catalyst bed temperature THC has become high. Then, the process proceeds to step S360 in which the electronic control unit 50 makes the abnormality determination.

On the other hand, if in step S350 the catalyst bed temperature THC is determined to be less than or equal to the upper-limit temperature THd (NO in step S350), the process returns to step S300. Thus, the degradation determination process is repeated.

Next, operation of the degradation determination process in accordance with this embodiment will be described with reference to FIG. 9. FIG. 9 is a graph showing how the relation between the catalyst bed temperature THC and the temperature difference ΔTH changes as the catalyst degradation advances, similarly to FIGS. 4 and 6. Incidentally, in FIG. 9, the degree of catalyst degradation increases in an order of a solid line X, a solid line Y, and a solid line Z, as in FIGS. 4 and 6.

As described above, the catalyst bed temperature THC at which the oxidation reaction begins to occur becomes gradually higher as the catalyst degradation advances. Therefore, as shown in FIG 9, the catalyst bed temperature THC at the time of the temperature difference ΔTH becoming substantially equal to the criterion temperature difference ΔTHjdg becomes the higher the more advanced the catalyst degradation is.

In the degradation determination process in this embodiment, it is determined whether the NOx storage reduction catalyst has degraded based on whether the catalyst bed temperature THC occurring when the temperature difference ΔTH becomes substantially equal to the criterion temperature difference ΔTHjdg is less than the criterion value C. Therefore, in the case where the catalyst bed temperature THC occurring when the temperature difference ΔTH becomes substantially equal to the criterion temperature difference ΔTHjdg is less than the criterion value C as shown in FIG 9, that is, during the state as shown by the solid line X and the solid line Y, the normality determination is made based on this condition. On the other hand, during the state as shown by the solid line Z, the catalyst bed temperature THC occurring when the temperature difference ΔTH becomes substantially equal to the criterion temperature difference ΔTHjdg is greater than or equal to the criterion value C; therefore, the abnormality determination is made based on this condition.

Thus, according to the foregoing third embodiment, the degradation of the NOx storage reduction catalyst can be determined even in the case where the amount of reactants is small, as in the first and second embodiments.

Incidentally, the third embodiment can also be carried out in appropriately modified forms as follow.

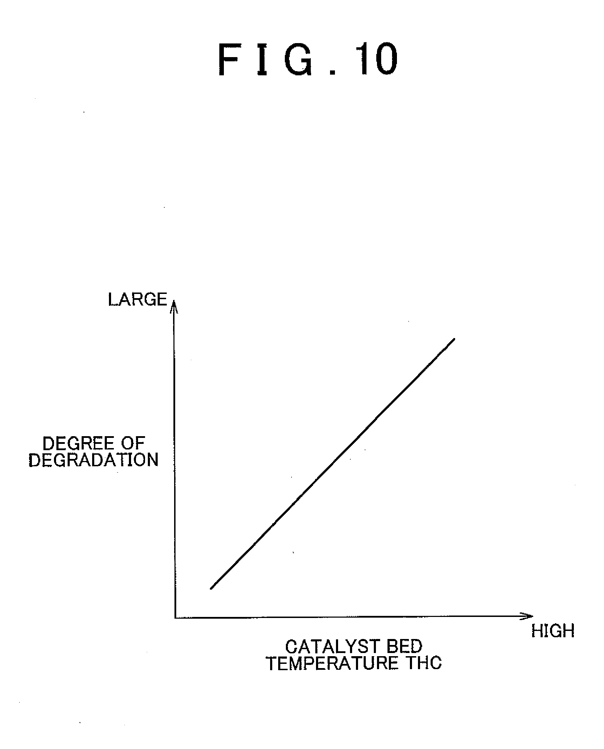

•As shown by THx, THy, THz in FIG. 9, the more advanced the catalyst degradation, the higher the catalyst bed temperature THC occurring when the temperature difference ΔTH becomes substantially equal to the criterion temperature difference ΔTHjdg. Therefore, the degree of degradation of the NOx storage reduction catalyst can also be determined based on the catalyst bed temperature THC occurring when the temperature difference ΔTH becomes substantially equal to the criterion temperature difference ΔTHjdg. For example, based on results of experiments or the like, a map that shows a relation between the degree of degradation the catalyst bed temperature THC occurring when the temperature difference ΔTH becomes substantially equal to the criterion temperature difference ΔTHjdg as shown in FIG 10 is created beforehand. Then, it suffices to quantitatively determine the degree of catalyst degradation with reference to the map, so that a numerical value showing the degree of degradation becomes the larger the larger the catalyst bed temperature THC occurring when the temperature difference ΔTH becomes substantially equal to the criterion temperature difference ΔTHjdg. The adoption of this construction makes possible to quantitatively estimate how much advanced the degradation of the NOx storage reduction catalyst is. Based on this estimation, it becomes possible to, for example, calculate an expected period of time until the next maintenance, and inform a driver of the vehicle of the expected period of time.

Besides, the first to third embodiments may also be carried out in appropriately modified forms as follow.

•When the vehicle speed SPD is high, the amount of outside air that contacts an outer peripheral surface of the PM filter 42 per unit time increases, and therefore the heat exchange between the PM filter 42 and outside air is accelerated. Therefore, the higher the vehicle speed SPD, the more the catalyst bed temperature THC declines. Therefore, it is also possible to adopt a construction in which the catalyst bed temperature THC is corrected so that the catalyst bed temperature THC becomes the lower the higher the vehicle speed SPD is, based on the vehicle speed SPD detected by the vehicle speed sensor 52 in addition to the outside air temperature THA. The adoption of this construction makes possible to more accurately estimate the catalyst bed temperature THC by taking into account changes in the amount of heat taken away from the outer periphery side of the PM filter 42 in association with changes in the vehicle speed SPD.

•Incidentally, it is also possible to adopt a construction in which the catalyst bed temperature THC calculated based on the upstream-side exhaust gas temperature THup is corrected based only on the vehicle speed SPD while omitting the construction in which the catalyst bed temperature THC is corrected so that the catalyst bed temperature THC becomes the lower the lower the outside air temperature THA is.

•It is also possible to adopt a construction in which the catalyst bed temperature THC is estimated to be the higher the higher the upstream-side exhaust gas temperature THup based only on the upstream-side exhaust gas temperature THup, without performing the foregoing correction.

•The foregoing embodiments adopt, as catalyst bed temperature estimation means, a construction in which the catalyst bed temperature THC is calculated based on the upstream-side exhaust gas temperature THup detected by the upstream-side exhaust gas temperature sensor 55. However, instead of this construction, it is also possible to adopt a construction in which a temperature sensor that directly detects the catalyst bed temperature THC is provided on the PM filter 42, and the catalyst bed temperature THC is directly detected by the temperature sensor.

•Besides, the foregoing embodiments present as reaction amount estimation means a construction in which the upstream-side exhaust gas temperature sensor 55 and the downstream-side exhaust gas temperature sensor 56 are provided, and the amount of temperature rise of the exhaust gas having passed through the PM filter 42 is calculated by subtracting the upstream-side exhaust gas temperature THup from the downstream-side exhaust gas temperature THlow, and the amount of the reaction on the NOx storage reduction catalyst is estimated based on the amount of temperature rise.

Instead of this construction, it is also possible to adopt a construction in which an upstream-side concentration sensor and a downstream-side concentration sensor that detect the concentration of a reactant, for example, HCs, that is contained in exhaust gas at the upstream side and the downstream side of the PM filter 42 are provided, and the amount of reaction is estimated based on the deviation between the concentration of the reactant on the upstream side that is detected by the upstream-side concentration sensor and the concentration of the reactant on the downstream side that is detected by the downstream-side concentration sensor. If this construction is adopted, the amount of the reactant consumed by oxidation reactions is estimated to be the larger the lower the concentration detected by the downstream-side concentration sensor is relative to the concentration detected by the upstream-side concentration sensor. Therefore, based on this, the amount of the exhaust purification reaction is estimated to be large.

•Besides, conversely to the foregoing construction, it is also possible to detect the concentration of a substance produced by a reaction, and estimate the amount of the exhaust purification reaction to be the larger the higher the concentration detected by the downstream-side concentration sensor is relative to the concentration detected by the upstream-side concentration sensor.

•In the diesel engine 10, during the low-load engine operation, the catalyst bed temperature THC less readily rises than in a petrol engine, due to the execution of the EGR control of recirculating a large amount of exhaust gas into the intake passageway 20 through the exhaust gas recirculation passageway 43. With regard to this, a post-injection of fuel or the like can be executed at the time of execution of the degradation determination process so as to supply unburned fuel as a reactant to the catalytic converter 41 disposed on the upstream side of the PM filter 42 and therefore causes oxidation reactions to occur, and heat of the oxidation will raise the temperature of the exhaust gas that is introduced into the PM filter 42, thus actively raising the catalyst bed temperature THC of the PM filter 42. If this construction is adopted, in association with the degradation determination process, the catalyst bed temperature THC rapidly rises, and the amount of the oxidation reaction rapidly increases. As a result, the catalyst bed temperature THC or the temperature difference ΔTH comes to reach, in a short time, a predetermined value (the criterion temperature THjdg, the criterion temperature difference ΔTHjdg) for determining the degradation of the exhaust purification catalyst, so that the degradation determination can be completed in an early period.

•Besides, the concrete methods for such temperature raising control are not limited to a post-injection of fuel, but may include a method in which a fuel addition valve is provided at a site on the exhaust passageway 30 on the upstream side of the catalytic converter 41, and directly supplies fuel into the exhaust passageway 30, or the like.

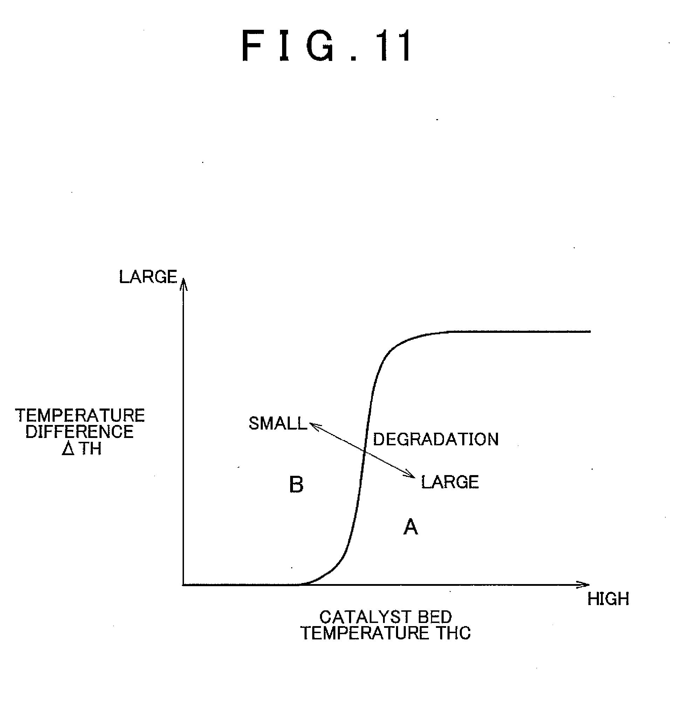

•The degradation determination processes shown above in conjunction with the embodiments are examples of the degradation determination means for determining the degradation of the NOx storage reduction catalyst based on the relation between the catalyst bed temperature THC and the amount of an oxidation reaction, and can be appropriately modified. For example, based on results of experiments or the like, the relation between catalyst bed temperature THC and the temperature difference ΔTH of a NOx storage reduction catalyst whose degree of degradation is a reference degree is mapped as shown in FIG. 11. Then, by comparing the relation in this map and the relation between the actually calculated catalyst bed temperature THC and the actually calculated temperature difference ΔTH, the degradation of the NOx storage reduction catalyst can also be determined. Concretely, if the relation between the catalyst bed temperature THC and temperature difference ΔTH shown by the solid line in FIG. 11 is used as a reference, and the calculated catalyst bed temperature THC and the calculated temperature difference ΔTH tend to change in a region A on the right side of the solid line in FIG. 11, it is possible to make, based on this condition, a degradation determination that the degree of degradation of the NOx storage reduction catalyst is larger than the degree of degradation that serves as a reference. Besides, if, with reference to the reference relation between the catalyst bed temperature THC and the temperature difference ΔTH shown by the solid line in FIG. 11, the calculated catalyst bed temperature THC and the calculated temperature difference ΔTH tend to change in a region B on the left side of the solid line in FIG. 11, it is possible to make, based on this condition, a normality determination that the degree of degradation of the NOx storage reduction catalyst is smaller than the reference degree of degradation.

•In the case where a fuel addition process of supplying a large amount of unburned fuel to the PM filter 42 is executed as in a filter regeneration process of forcing the catalyst bed temperature to rise in order to eliminate the particulate matter (PM) deposited on the PM filter 42, or the like, the degradation determination may be performed within a temperature range that is higher than or equal to the PM activation temperature THx similarly to the related-art technology. Therefore, it is also possible to adopt a construction in which, in addition to the degradation determination process according to the invention, the related-art degradation determination process is also executed, and final degradation determination is performed with reference to results of the two degradation determination processes. In this case, it is also possible to adopt, for example, a construction in which, on condition that the degradation determination be performed in at least one of the two degradation determination processes, a degradation determination that the NOx storage reduction catalyst has degraded is finally made, and the catalyst abnormality lamp 60 is lit on.

•The foregoing embodiments present a construction in which the degradation determination process is executed for the NOx storage reduction catalyst supported on the PM filter 42; however, the invention is not limited to the above-described constructions. Besides, the invention can be applied not only to the NOx storage reduction catalyst, but also to any exhaust purification catalyst as long as the catalyst accelerates an exhaust purification reaction that removes a reactant contained in exhaust gas.

•Besides, although in the foregoing embodiments the device for determining degradation of the invention is embodied as the electronic control unit 50 of the diesel engine 10, the invention can be applied as a device for determining degradation for an exhaust purification catalyst of not only diesel engines but also petrol engines.

•Although in the foregoing embodiments the temperature difference ΔTH is calculated by using the upstream-side exhaust gas temperature THup and the downstream-side exhaust gas temperature THlow in S110, S210 and S310, the invention is not particularly limited by this calculation method but may adopt any method that estimates the amount of a reaction on the exhaust purification catalyst. For example, the temperature difference ΔTH may be calculated from only one of the upstream-side exhaust gas temperature THup and the downstream-side exhaust gas temperature THlow.

•In the third embodiment, it is determined whether the NOx storage reduction catalyst has degraded based on whether the catalyst bed temperature THC occurring when the temperature difference ΔTH becomes substantially equal to the criterion temperature difference ΔTHjdg is less than the criterion value C. However, the degradation determination of the NOx storage reduction catalyst may also be performed based on whether the catalyst bed temperature THC becomes greater than or equal to a criterion value while the temperature difference ΔTH is within a predetermined temperature difference range from a lower-limit temperature difference to an upper-limit temperature difference as in the determination method of the first embodiment.

While the invention has been described with reference to example embodiments thereof, it is to be understood that the invention is not limited to the described embodiments or constructions. To the contrary, the invention is intended to cover various modifications and equivalent arrangements. In addition, while the various elements of the disclosed invention are shown in various example combinations and configurations, other combinations and configurations, including more, less or only a single element, are also within the scope of the appended claims.

## Claims

1. A device for determining degradation of a vehicle exhaust purification catalyst including:
catalyst bed temperature estimation means (50) for estimating catalyst bed temperature of an exhaust purification catalyst that is provided in an exhaust passageway (30) of an internal combustion engine; and
reaction amount estimation means (50) for estimating reaction amount of an exhaust purification reaction on the exhaust purification catalyst; **characterised by** comprising:
degradation determination means (50) for determining degradation of the exhaust purification catalyst based on a relation between the catalyst bed temperature estimated by the catalyst bed temperature estimation means (50) and the reaction amount of the exhaust purification reaction estimated by the reaction amount estimation means (50) when the catalyst bed temperature is in a temperature range in which the reaction amount on the exhaust purification catalyst increases as the catalyst bed temperature rises and which is below an activation temperature at which activation of the exhaust purification catalyst is completed.

2. The device for determining degradation according to claim 1, wherein the reaction amount estimation means (50) estimates the reaction amount of the exhaust purification reaction by comparing a state of exhaust gas before passage through the exhaust purification catalyst and a state of exhaust gas after passage through the exhaust purification catalyst.

3. The device for determining degradation according to claim 1 or 2, wherein the degradation determination means (50) determines a degree of degradation of the exhaust purification catalyst to be greater if the reaction amount estimated by the reaction amount estimation means (50) when the catalyst bed temperature estimated by the catalyst bed temperature estimation means (50) is substantially equal to a predetermined temperature is smaller.

4. The device for determining degradation according to any one of claims 1 to 3, wherein:
the degradation determination means (50) determines that the exhaust purification catalyst is normal when the reaction amount estimated by the reaction amount estimation means (50) when the catalyst bed temperature estimated by the catalyst bed temperature estimation means (50) is substantially equal to a predetermined temperature is greater than or equal to a predetermined reaction amount; and
the degradation determination means (50) determines that the exhaust purification catalyst is abnormal when the reaction amount is less than the predetermined reaction amount.

5. The device for determining degradation according to any one of claims 1 to 3, wherein:
the degradation determination means (50) determines that the exhaust purification catalyst is normal if the reaction amount estimated by the reaction amount estimation means (50) when the catalyst bed temperature estimated is in a predetermined temperature range that is in the temperature range becomes greater than or equal to a predetermined reaction amount; and
the degradation determination means (50) determines that the exhaust purification catalyst is abnormal if the reaction amount does not become greater than or equal to the predetermined reaction amount although the catalyst bed temperature estimated rises to above the predetermined temperature range.

6. The device for determining degradation according to claim 1 or 2, wherein the degradation determination means (50) determines a degree of degradation of the exhaust purification catalyst to be greater if the catalyst bed temperature estimated by the catalyst bed temperature estimation means (50) when the reaction amount estimated by the reaction amount estimation means (50) is substantially equal to a predetermined reaction amount is higher.

7. The device for determining degradation according to any one of claims 1, 2 and 6, wherein:
the degradation determination means (50) determines that the exhaust purification catalyst is normal when the catalyst bed temperature estimated by the catalyst bed temperature estimation means (50) when the reaction amount estimated by the reaction amount estimation means (50) becomes substantially equal to a predetermined reaction amount is less than a predetermined temperature; and
the degradation determination means (50) determines that the exhaust purification catalyst is abnormal when the catalyst bed temperature is greater than or equal to the predetermined temperature.

8. The device for determining degradation according to any one of claims 1, 2 and 6, wherein:
the degradation determination means (50) determines that the exhaust purification catalyst is normal if the catalyst bed temperature estimated by the catalyst bed temperature estimation means (50) when the reaction amount estimated by the reaction amount estimation means (50) is in a predetermined reaction amount range is less than a predetermined temperature;
the degradation determination means (50) determines that the exhaust purification catalyst is abnormal when the catalyst bed temperature is greater than or equal to the predetermined temperature; and
the predetermined reaction amount range is a range in which the reaction amount of the exhaust purification reaction is increasing.

9. The device for determining degradation according to any one of claims 1 to 8, wherein:
the catalyst bed temperature estimation means (50) and the reaction amount estimation means (50) include an upstream-side exhaust gas temperature sensor (55) that is provided at a site in the exhaust passageway (30) on an upstream side of the exhaust purification catalyst and that detects temperature of exhaust gas introduced into the exhaust purification catalyst, and a downstream-side exhaust gas temperature sensor (56) that is provided at a site in the exhaust passageway (30) on a downstream side of the exhaust purification catalyst and that detects the temperature of exhaust gas having passed through the exhaust purification catalyst;
the catalyst bed temperature estimation means (50) estimates the catalyst bed temperature of the exhaust purification catalyst to be higher if an upstream-side exhaust gas temperature detected by the upstream-side exhaust gas temperature sensor (55) is higher; and
the reaction amount estimation means (50) estimates the reaction amount of the exhaust purification reaction on the exhaust purification catalyst to be larger if a downstream-side exhaust gas temperature detected by the downstream-side exhaust gas temperature sensor (56) is higher by a greater amount than the upstream-side exhaust gas temperature detected by the upstream-side exhaust gas temperature sensor.

10. The device for determining degradation according to claim 9, wherein the catalyst bed temperature estimation means (50) further includes outside air temperature detection means (50) for detecting outside air temperature, and corrects the catalyst bed temperature of the exhaust purification catalyst estimated based on the upstream-side exhaust gas temperature so that the catalyst bed temperature becomes lower when the outside air temperature detected by the outside air temperature detection means (50) is lower.

11. The device for determining degradation according to claim 9 or 10, wherein the catalyst bed temperature estimation means (50) includes vehicle speed detection means (50) for detecting vehicle speed, and corrects the catalyst bed temperature of the exhaust purification catalyst estimated based on the upstream-side exhaust gas temperature so that the catalyst bed temperature becomes lower when the vehicle speed detected is higher.

12. The device for determining degradation according to any one of claims 1 to 11, further comprising temperature raise control means (50) for, in association with determination of the degradation of the exhaust purification catalyst, executing a temperature raise control of raising the catalyst bed temperature of the exhaust purification catalyst by raising the temperature of exhaust gas introduced into the exhaust purification catalyst by oxidisation heat that is produced by an oxidation reaction caused by supplying unburned fuel to an oxidation catalyst (41) that is provided at a site in the exhaust passageway on an upstream side of the exhaust purification catalyst.

13. A method for determining degradation of a vehicle exhaust purification catalyst **characterised by** comprising:
estimating catalyst bed temperature of an exhaust purification catalyst that is provided in an exhaust passageway (30) of an internal combustion engine;
estimating reaction amount of an exhaust purification reaction on the exhaust purification catalyst; and
determining degradation of the exhaust purification catalyst based on a relation between the estimated catalyst bed temperature and the estimated reaction amount of the exhaust purification reaction when the catalyst bed temperature is in a temperature range
in which the reaction amount on the exhaust purification catalyst increases as the catalyst bed temperature rises and which is below an activation temperature at which activation of the exhaust purification catalyst is completed.
